# EUROPÄISCHE PATENTSCHRIFT

(11) **EP 0 886 944 B1**
(45) Veröffentlichungstag und Bekanntmachung des Hinweises auf die Patenterteilung: **02.05.2007**
(21) Anmeldenummer: 97915346.7
(22) Anmeldetag: 12.03.1997
(51) Int. Cl.: H04L 29/02

(54) **VERFAHREN UND ANORDNUNG ZUM ABWICKELN VON PROTOKOLLEN ZWISCHEN TELEKOMMUNIKATIONSGERÄTEN DRAHTLOSER TELEKOMMUNIKATIONSSYSTEME**
PROCESS AND ARRANGEMENT FOR EXECUTING PROTOCOLS BETWEEN TELECOMMUNICATIONS DEVICES IN WIRELESS TELECOMMUNICATIONS SYSTEMS
PROCEDE ET DISPOSITIF PERMETTANT LE DEROULEMENT DE PROTOCOLES ENTRE DES APPAREILS DE TELECOMMUNICATION DE SYSTEMES DE TELECOMMUNICATION SANS FIL

(30) Priorität: 14.03.1996 DE 19610086
(43) Veröffentlichungstag der Anmeldung: 30.12.1998
(73) Patentinhaber: SIEMENS AKTIENGESELLSCHAFT, 80333 München (DE)
(72) Erfinder: BAUMEISTER, Josef, D-46325 Borken (DE); RÜTHER, Ralf, D-48653 Coesfeld (DE); BECKERS, Michael, D-46395 Bocholt (DE); EUSCHER, Christoph, D-46414 Rhede (DE); BARTSCH, Ulrich, D-46244 Bottrop (DE); LOONEN, Hans-Jürgen, D-46419 Isselburg (DE); HOFSCHEN, Sabine, D-82541 Münsing (DE); BIEDERMANN, Rolf, D-46499 Hamminkeln (DE)
(86) Internationale Anmeldenummer: PCT/DE1997/000493
(87) Internationale Veröffentlichungsnummer: WO 1997/034425

(56) Entgegenhaltungen:
- CAMPBELL G M ET AL: "DCT 1800 - A DECT SOLUTION FOR RADIO ACCESS APPLICATION" ERICSSON REVIEW, Bd. 71, Nr. 2, Seiten 84-92, XP000460735
- KUEGLE B ET AL: "PRODECT 1.0 SOFTWARE PACKAGE FOR DECT HOME PHONES" SIEMENS COMPONENTS, Bd. 30, Nr. 5, Seiten 32-36, XP000644999
- SCHMITT M: "EUROPAWEIT PER DECT MOBIL EIN STANDARD ERMOGLICHT GRENZENLOSE MOBILKOMMUNIKATION IN ALLEN LEBENSBEREICHEN" TELCOM REPORT, Bd. 17, Nr. 1, Seite 44/45 XP000429292
- ELBERSE A: "DECT: THE IDEAL TELEWORK ACCESS TECHNOLOGY" IEE COLLOQUIUM ON TELEWORKING AND TELECONFERENCING, Seiten 7/01-7/09, XP000541902
- OLANDER P: "STATUS AND FUTURE ACTIVITIES" IEEE INTERNATIONAL SYMPOSIUM ON PERSONAL, INDOOR AND MOBILE RADIO COMMUNICATIONS, Bd. 4, Seiten 1064-1069, XP000644985
- "DECT WIRD MIT GAP HERSTELLERUNABHANGIG" FUNKSCHAU, Bd. 68, Nr. 13, Seiten 38-41, XP000597194

## Beschreibung

Die Erfindung bezieht sich auf ein Verfahren zum Abwickeln von Protokollen zwischen Telekommunikationsgeräten drahtloser Telekommunikationssysteme gemäß dem Oberbegriff des Patentanspruches 1 und auf ein drahtloses Telekommunikationsgerät gemäß dem Oberbegriff des Patentanspruches 12.

Drahtlose Telekommunikationssysteme der vorstehend bezeichneten Art sind Nachrichtensysteme mit einer Fernübertragungsstrecke zwischen einer Nachrichtenquelle und einer Nachrichtensenke zur Nachrichtenverarbeitung und Nachrichtenübertragung, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtlos - z.B. nach diversen Funkstandards wie DECT, GSM, WACS oder PACS, IS-54, PHS, PDC etc. - ist (vgl. IEEE Communications Magazine, January 1995, Seiten 50 bis 57; D.D. Falconer et al:"Time Division Multiple Access Methods for Wireless Personal Communications").

"Nachricht" ist ein übergeordneter Begriff, der sowohl für den Sinngehalt (Information) als auch für die physikalische Repräsentation (Signal) steht. Signale können dabei z.B.
(1) Bilder
(2) gesprochene Wörter
(3) geschriebene Wörter
(4) verschlüsselte Wörter oder Bilder repräsentieren.

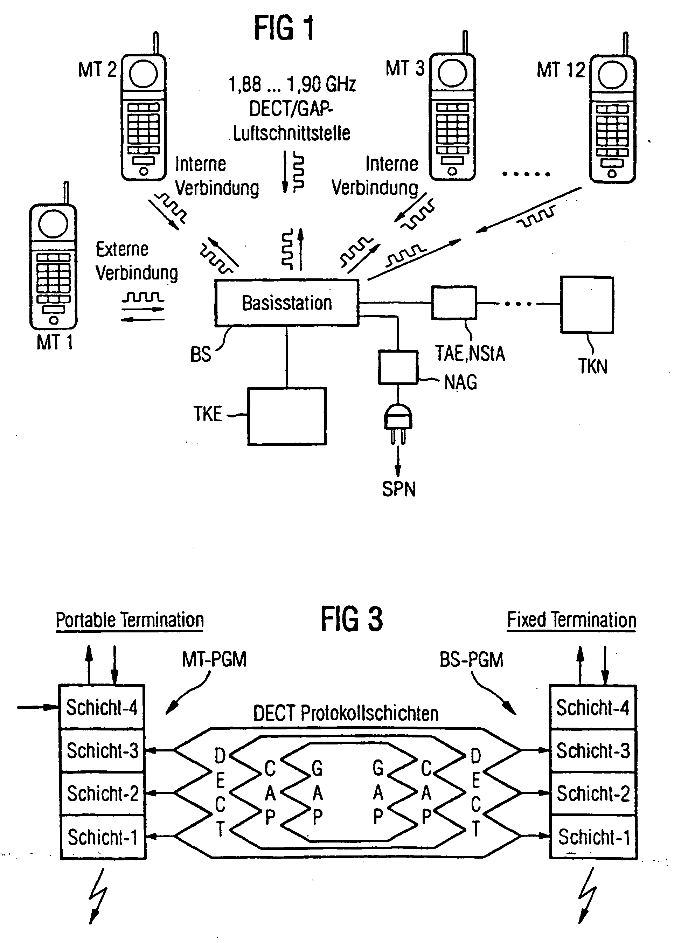

FIGUR 1 zeigt stellvertretend für die Vielzahl der drahtlosen Telekommunikationssysteme ein DECT/GAP-System, bei dem gemäß dem DECT/GAP-Standard (Digital European Cordless Telecommunication; vgl. (1): Nachrichtentechnik Elektronik 42 (1992) Jan./Feb. Nr. 1, Berlin, DE; U. Pilger "Struktur des DECT-Standards", Seiten 23 bis 29 in Verbindung mit der ETSI-Publikation ETS 300175-1...9, Okt. 1992; (2): Telcom Report 16 (1993), Nr. 1, J. H. Koch: "Digitaler Komfort für schnurlose Telekommunikation - DECT-Standard eröffnet neue Nutzungsgebiete", Seiten 26 und 27; (3): tec 2/93 - Das technische Magazin von Ascom "Wege zur universellen mobilen Telekommunikation", Seiten 35 bis 42; Generic Access Profile; vgl. ETSI-Publikation prETS 300444, April 1995, Final Draft, ETSI, FR) an einer DECT/GAP-Basisstation BS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (Time Division Multiple Access/Frequency Division Multiple Access/ Time Division Duplex) parallel zu DECT/GAP-Mobilteilen MT1...MT12 aufgebaut werden. Die Zahl 12 ergibt sich aus einer Anzahl "k" von für den Duplexbetrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z. B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. Telcom Report 16, 1993, Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. Telcom Report 16, 1993, Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekonununikationsendgerät TKE möglich. Dabei ist es prinzipiell auch vorstellbar, daß ein zweites Mobilteil, z. B. das Mobilteil MT12 anstelle des Telekommunikationsendgerätes TKE den zweiten Anschluß für eine externe Verbindung nutzt. Die Mobilteile MT1...MT12 werden gemäß der nachveröffentlichten deutschen Patentanmeldung P 1 95 45 762.5 im Handbetrieb (Normalbetrieb) mit einer Batterie oder einem Akkumulator und im Freisprechbetrieb in Verbindung mit einer an ein Spannungsnetz SPN angeschlossenen Ladestation betrieben. Die als schnurlose Klein-Vermittlungsanlage ausgebildete Basisstation wird über ein Netzanschlußgerät NAG an das Spannungsnetz SPN angeschlossen.

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist unter anderem eine Codier-/Decodiereinrichtung CODEC enthalten. Die Zentrale Steuerung ZST weist sowohl für die Basisstation BS als auch für das Mobilteil MT einen Mikroprozessor µP mit einem nach dem OSI/ISO-Schichtenmodell (vgl. (1): Unterrichtsblätter - Deutsche Telekom Jg.48, 2/1995, Seiten 102 bis 111; (2): ETSI-Publikation ETS 300175-1...9, Okt. 1992) aufgebauten Programmmodul PGM, ein Signalsteuerungsteil SST und einen digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten drei Schichten (Schicht-1...Schicht-3) sowie eine vierte als IWU-Schicht (InterWorking Unit) bezeichnete Schicht-4 dargestellt. Das Signalsteuerungsteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischeri Signalsteuerungsteil BMC zusätzlich Vermittlungsfunktionen (Switch-Funktionen) übernimmt. Der Mikroprozessor µP ist - gemäß der eingangs angegebenen Definition - Bestandteil eines Mikroprozessorsystems.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

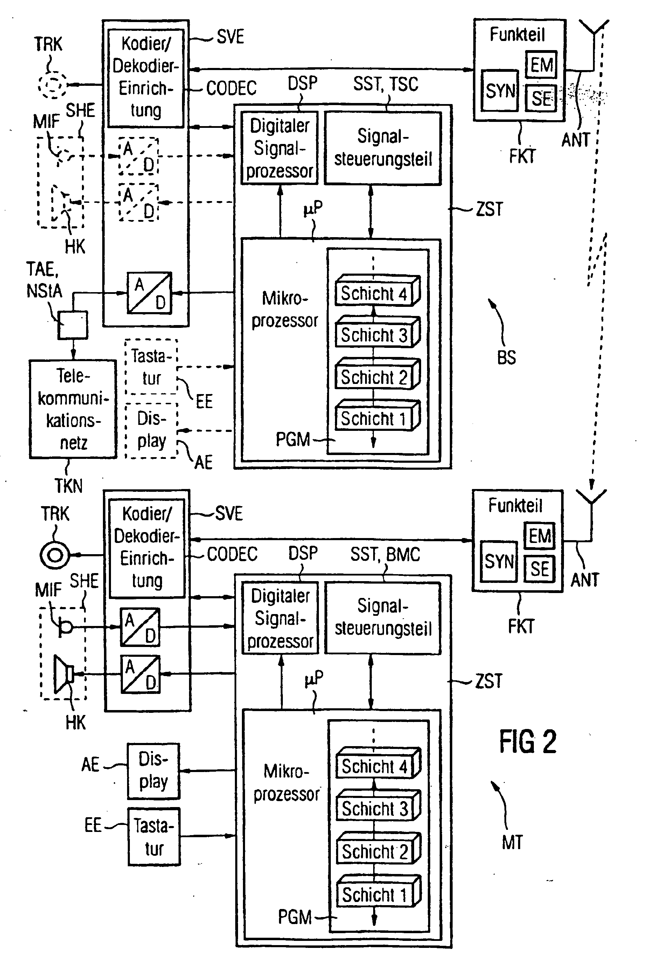

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z. B. aus einer als Tastatur ausgebildeten Eingabeeinrichtung EE, einer als Display ausgebildeten Anzeigeeinrichtung AE, eine als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

Die Kommunikation zwischen zwei beliebigen Kommunikationsendgeräten (Kommunikationspartnern) wird durch in einem Standard definierte/als Norm festgelegte Protokolle (Standardprotokolle) geregelt, welche die Regeln zum Austausch von Informationen zwischen je zwei Kommunikationspartnern auf derselben Ebene des ISO/OSI-Schichtenmodells festschreiben.

In der Mobilfunk-Kommunikation ist z.B. - neben den sonstigen u.a. eingangs erwähnten Mobilfunk-Standards - der GSM-Standard mit den GSM-Standardprotokollen (Groupe Speciale Mobile oder Global System for Mobile Communication; vgl. Informatik Spektrum 14 (1991) Juni, Nr. 3, Berlin, DE; A.Mann:"Der GSM-Standard - Grundlage für digitale europäische Mobilfunknetze", Seiten 137 bis 152) zu nennen.

In der Schnurlos-Kommunikation ist z.B. - neben den sonstigen u.a. eingangs erwähnten Schnurlos-Standards - der bereits erwähnte DECT/GAP-Standard mit den DECT/GAP-Standardprotokollen zu nennen.

Standardprotokolle definieren im speziellen Meldungs- und Informationsformate mit den zu den jeweiligen Informationselementen zugehörigen Standardwerten sowie Prozeduren, die den zeitlichen Ablauf und die logische Abfolge des Meldungsaustausches festlegen.

In den zum DECT-Standard gehörenden Protokollen wird insbesondere der Informationsaustausch zwischen einem mobilen Schnurlos-Kommunikationsendgerät und der zugehörigen Schnurlos-Feststation festgelegt, wobei Kommunikationsmedium die Luft ist.

Der GAP-Standard stellt eine Untermenge des DECT-Standards dar, mit dem Ziel, daß die Einhaltung des im GAP-Standard eingeschränkten Protokolls eine herstellerunabhängige Kompatibilität zwischen den Kommunikationspartnern gewährleistet.

Der DECT/GAP-Standard definiert
a) Meldungen zur Signalisierung von Verbindungsauf- und - abbau sowie zum Mobilitätsmanagement,
b) Informationselemente innerhalb dieser Meldungen,
c) spezielle Informationselemente, die herstellerspezifische Erweiterungen erlauben, sowie
d) Prozeduren zum Auf- und Abbau von Verbindungen, zum Austausch von Informationen (Tastendrücke, Displays, Töne etc.) sowie zum Mobilitätsmanagement (Anmeldung, Verschlüsselung, Authentisierung).

Der GAP-Standard ermöglicht darüber hinaus eine Kompatibilität zwischen verschiedenen Geräten im Rahmen einer bestimmten Grundfunktionalität (Auf- und Abbau von Sprachverbindungen, Mobilität). Darüber hinausgehende Funktionalitäten können z. B. über ein Keypad-Protokoll (Austausch von Tasten) realisiert werden. Da diese Funktionalitäten jedoch nicht in einem Protokoll festgehalten sind, ist eine Kompatibilität zwischen verschiedenen Geräteherstellern und -generationen nicht mehr gewährleistet. Vielmehr funktionieren nach dem Status Quo die Zusatzleistungsmerkmale nur in speziell aufeinander abgestimmten Kommunikationssystemen, bestehend aus dem Mobilteil und der Basisstation einer ganz bestimmten Gerätegeneration.

Schnurlos-Kommunikationsendgeräte mit Menüsteuerung und Display zeichnen sich zudem durch eine lokale Steuerung der Leistungsmerkmale sowie der Spracheinstellung aus. Das heißt, daß basisstationsspezifische Leistungsmerkmale nicht in den Menüs angeboten werden. Schnurlos-Kommunikationsendgeräte ohne Menüsteuerung bedienen sich eines Keypad-Protokolls, über dessen Funktionalität auch nicht das Kommunikationsendgerät, sondern der Benutzer selbst mittels einer Bedienungsanleitung, die jeweils an einem speziellen Typ von Feststation gültig ist, informiert ist.

Zusammengefaßt bedeutet dies, daß in den Schnurlos-Mobilteilen keinerlei Intelligenz oder Wissen bezüglich der möglicherweise vorhandenen basisstationsspezifischen Leistungsmerkmale (Rückfrage, Anrufumleitung etc.) integriert ist. Verfügbar sind nur mobilteil-spezifische Leistungsmerkmale wie z. B. Telefonbuch oder Hörerlautstärke sowie eingeschränkte GAP-Leistungsmerkmale.

Die Ressourcensteuerung sowie der Zugriff auf Display, Tasten und Töne/Rufsequenzen erfolgt lokal im Schnurlos-Kommunikationsendgerät.

Dies bedeutet, daß das Display im Besitz des Mobilteils ist - Displayinformationen, die durch die Feststation verpackt - in GAP-Meldungen enthalten sein können, können wahlweise zusätzlich/anstatt der lokalen Displayinformationen angezeigt werden; eine Vorschrift, wie GAP-Displaymeldungen zu behandeln sind sowie eine Einigung über Zeichensätze über den GAP-Standardzeichensatz (z.B. IA5-Norm) hinaus ist nicht Bestandteil des GAP-Standards.

Etwaiges Betätigen von Softkey- und Menütasten wird vom Mobilteil lokal bewertet. Die GAP-Kanäle für Tastendrücke sehen lediglich die Ziffern 0-9, *, # sowie einige spezielle GAP-Keys wie z. B. "goto DTMF" (Temporäre Wahlumschaltung von IWV auf MFV) und "Pause" vor. Eine Grundlage für eine Menüsteuerung durch Tastendrücke ist nicht Bestandteil des GAP-Standards.

Schließlich gibt es keine Möglichkeit, die Rufsequenz des Mobilteils durch die Basis zu beeinflussen. Der GAP-Standard bietet zwar die Möglichkeit einer "Outband"-Signalisierung von Tönen und Rufsequenzen, die Interpretation der laut GAP-Standard gültigen Werte für die Rufsequenzen bleibt jedoch dem Mobilteil lokal überlassen.

Die Abwicklung des GAP-Protokolls dient im Normalfall dem Informationsaustausch, der für den Auf- und Abbau von Verbindungen und für das Mobilitätsmanagement benötigt wird sowie der Sprachübertragung.

Aus dem DECT-Standard ist es weiterhin bekannt (vgl. ETS 300 175-1 Okt. 1992, Kap. 8) spezielle Informationselemente des DECT-Standardprotokolls, z.B. die "ESCAPE TO PROPRIETARY"-Informationselemente als "Fluchtwege" für individuelle (benutzerbezogene) Protokolle zu nutzen.

Aus der Druckschrift Ericsson Review, Bd. 71, Nr. 2, 1994, Seiten 84 bis 92; G.M. Campbell, P. Hannema: "DCT 1800 - A Dect Solution For Radio Access Application" ist ein drahtloses Telekommunikationssystem mit mindestens einem ersten Telekommunikationsgerät und mindestens einem zweiten Telekommunikationsgerät bekannt, bei dem zwischen dem ersten Telekommunikationsgerät und dem zweiten Telekommunikationsgerät über eine DECT-Luftschnittstelle das DECT-Protokoll mit DECTspezifischen Meldungen und Informationselementen und zusätzlich mit diesen Informationselementen ein proprietäres Protokoll abgewickelt wird.

Die der Erfindung zugrundeliegende Aufgabe besteht darin,
(i) die vorstehend genannten Nachteile des Stands der Technik zu beseitigen,
(ii) zwischen über standardisierte Luftschnittstellen verbundene Telekommunikationsgeräte in drahtlosen Telekommunikationssystemen eine bei der Abwicklung von telekommunikationsstandardspezifischen Protokollen (Standardprotokollen) übertragene Informationsmenge derart zu erhöhen, daß einerseits die Standardprotokolle weiterhin uneingeschränkt abgewickelt werden können (Erhaltung der Interoperabilität des Telekommunikationssystems) und andererseits durch die zusätzlich übertragene Informationsmenge das drahtlose Telekommunikationssystem bezüglich der systemimmanenten Telekommunikationsgeräte strukturiert werden kann.

Diese Aufgabe wird ausgehend
1) von dem in dem Oberbegriff des Patentanspruches 1 definierten Verfahren durch die im Kennzeichen des Patentanspruches 1 angegebenen Merkmale und
2) von der in dem Oberbegriff des Patentanspruches 12 definierten Anordnung (drahtloses Telekommunikationsgerät) durch die im Kennzeichen des Patentanspruches 12 angegebenen Merkmale gelöst.

Die der Erfindung zugrundeliegende Idee besteht darin, daß in einem drahtlosen Telekommunikationssystem unter der Steuerungshoheit eines ersten Telekommunikationsgerätes des Telekommunikationssystems - z.B. nach Anspruch 6 der Fest- bzw. Basisstation oder nach Anspruch 7 des Mobilteils - Steuerungsmechanismen (d.h. Meldungen, Informationselemente und Prozeduren) eines Standardprotokolls (z.B. Protokoll nach dem DECT/GAP-Standard) zur Abwicklung eines Sonderprotokolls aktiviert werden, die zum Austausch zusätzlicher Informationen zwischen dem ersten Telekommunikationsgerät und einem zweiten Telekommunikationsgerätes des Telekommunikationssystems dienen.

Dabei ist es von Vorteil, daß
- die Interoperabilität eines Teilsystems des Kommunikationssystems, bestehend aus einem Schnurlos-Mobilteil oder einer Schnurlos-Feststation, mit GAP-Systemen erhalten bleibt (Interoperabilität),
- mit dem Sonderprotokoll Telekommunikationsgeräte unterschiedlicher zeitlicher und/oder örtlicher Herkunft adaptiert werden (Kompatibilität),
- mit dem Sonderprotokoll flexibel Mobilteile und Feststationen, insbesondere Schnurlos-Mobilteile und Schnurlos-Feststationen nach dem DECT/GAP-Standard, verschiedener Gerätegenerationen zu einem einzigen Kommunikationssystem integriert werden, wobei sich für jede Zuordnung eines Mobilteiltyps zu einem Typ von Feststation verschiedene Ausprägungen des Leistungsumfangs des gesamten Kommunikationssystems ergeben (Parametrisierung des Systems),
- der Leistungsumfang des Gesamtsystems, auf den vom Mobilteil zugegriffen wird, gesteigert wird, um dem Mobilteil unbekannte Funktionen der jeweiligen Feststation (Integration der Leistungsspektren verteilter Systeme),
- mit dem Sonderprotokoll eine Koordinierung verteilter Zugehörigkeiten erreicht wird (Ressourcenkoordination verteilter Systeme).
- das die Steuerung des Kommunikationssystem parametrisiert wird, wobei
   .. die Grundlage für die Parametrisierung durch eine Organisation verschiedener Schnurlos-Gerätetypen in Klassen geschaffen wird,
   .. eine Austauschprozedur zur Bekanntmachung der Geräteklasse Bestandteil des Sonderprotokolls ist,
   .. Geräte einer Geräteklasse einheitlich behandelt werden,
   .. verschiedene Geräteklassen unterschiedlich bedient werden,
   .. Geräte verschiedener Geräteklassen automatisch gemäß der größtmöglichsten Gemeinsamkeiten behandelt werden,
   .. zukünftige Geräte abwärtskompatibel bleiben.
- Basis- und Leistungsmerkmale in menügesteuerten Gesamtsystemen verteilt koordiniert werden, wobei
   .. der Benutzer des Mobilteils alle Leistungsmerkmale der Basisstation und des Mobilteils in einem Menü angeboten bekommt,
   .. die Menüs des Mobilteils durch die Feststation ferngesteuert werden können,
   .. die Steuerung der den verschiedenen Endsystemen innewohnenden Leistungsmerkmale verteilt erfolgt, d.h. daß die Prozeduren des Sonderprotokolls eine Koordinierung der auf die Endsysteme verteilten Leistungsmerkmale ermöglichen,
   .. das Schnurlos-Mobilteil kein Wissen über die Leistungsmerkmale der Feststation hat, was Einsparungen an Code und Speicherplatz im Mobilteil bedeutet,
   .. die Feststation die Semantik der Leistungsmerkmale im Mobilteil nicht zu kennen braucht,
   .. die Feststation Informationen über die im Mobilteil vorhandenen lokalen Leistungsmerkmale mit Hilfe der Prozeduren aus dem Sonderprotokoll durch den Austausch bestimmter Codes zur Erkennung der Leistungsmerkmale erhält,
   .. die Leistungsmerkmale im Mobilteil klassifiziert sind, dadurch ergibt sich eine für die Zukunft taugliche Organisation beliebiger lokaler Leistungsmerkmale,
   .. die Feststation mittels der Klassenzugehörigkeit flexibel entscheidet, welche der Leistungsmerkmale in welchen Zuständen in die Menüs eingespielt werden,
   .. die Feststation mittels Klassenzugehörigkeit auch Leistungsmerkmale zukünftiger Mobilteile in die Menüs einspielt, obwohl diese derzeit noch nicht bekannt sind (Parametrisierung der Schnurlos-Feststationen auf verschiedenen Mobilteilgenerationen),
   .. die Einstellung der Landessprache lokal im Schnurlos-Mobilteil erfolgt, aber mittels einer Prozedur des Sonderprotokolls automatisch in der Feststation ferngesteuert wird.
- die Steuerung der physikalischen Ressourcen verteilt wird, wobei
   .. die rein lokale Ressourcensteuerung von Display, Tasten und Tönen im Mobilteil auf jeweilige Anforderung durch die Feststation mittels einer Prozedur des Sonderprotokolls hin aufgehoben werden kann,
   .. die Feststation die permanente und geregelte Hoheit (Vollmacht) über den Display-Inhalt des Mobilteils ergreifen kann (mittels einer Prozedur des Sonderprotokolls),
   .. die Feststation, auch wenn sie im Besitz des angezeigten Display-Inhaltes ist, auf lokale Sonderdarstellungen des Mobilteils zugreifen kann (mittels Prozeduren des Sonderprotokolls),
   .. die Feststation, auch wenn sie im Besitz des angezeigten Display-Inhaltes ist, zum Zwecke des Aufrufs lokaler Leistungsmerkmale, die mit einer vorübergehenden lokalen Menüsteuerung verbunden sind, die Hoheit über das Display wieder temporär abgeben kann,
   .. über das Standardprotokoll (z.B. das GAP-Protokoll) hinaus Sonderprozeduren zur Anzeige und der Blinksteuerung der Wahlziffern existieren, die ein Blinken der Wahlziffern unmittelbar nach dem Zeitpunkt der Auswahl der jeweiligen Ziffer durch die Vermittlungstechnik der Feststation ermöglichen, im Status Quo findet eine Blinksteuerung nur lokal im Mobilteil, also sogar vor der Übertragung der jeweiligen Ziffer über die Luft an die Feststation statt,
   .. zwischen Mobilteil und Feststation eine Prozedur im Sonderprotokoll zur Einigung über die Einstellung der Zeichensätze für Display und Tastatur existiert,
   .. der Benutzer nichts von den beiden virtuellen Displays des Mobilteils (lokales, ferngesteuertes) bemerkt, d.h. das Display erscheint als eine Einheit,
   .. über die bekannten Tastencodes hinaus weitere Tastencodes definierbar sind (Softkeys, etc.),
   .. die Feststation zum Zwecke einer Menüsteuerung die Soft- und Menükeys des Mobilteils fernbedienen kann, indem es die Tastencodes dieser Tasten anfordert und das Mobilteil von einer lokalen Auswertung der Tasten fernhält,
   .. die Feststation, auch wenn sie die Fernsteuerung über die Soft- und Menükeys erlangt hat, dem Mobilteil die Hoheit über die Tastenauswertung temporär wieder erteilen kann,
   .. die Schnurlos-Feststation, wenn sie von einer "Outband"-Signalisierung der Ruftöne Gebrauch machen will, die Möglichkeit hat, die Rufsignalisierung im Mobilteil zu konfigurieren (mittels Informationen, die mit Hilfe des Sonderprotokolls übertragen werden können),
- das im Telekommunikationsstandard (z.B. DECT/GAP-Standard) vorhandene Konzept zum Auf- und Abbau von Sprachverbindungen zum Austausch kommunikatikonsgerätespezifischer Eigenschaften nutzbar ist, wobei
   .. kein Zusatzaufwand entsteht, da vorhandene Kanäle ausgenutzt werden,
   .. der Informationsaustausch der Bekanntmachung der Leistungsmerkmale des Mobilteils in der Anmeldephase dient,
   .. der Informationsaustausch der Bekanntmachung bestimmter Basisrestriktionen dienen kann (Direktrufkonzept).

weitere vorteilhafte Weiterbildungen der Erfindung sind in den Unteransprüchen angegeben.

Ein Ausführungsbeispiel der Erfindung wird anhand der FIGUREN 3 bis 6 erläutert. Es zeigen:
FIGUR 3 ausgehend von dem bekannten DECT/GAP-System nach FIGUR 2 den Datenaustausch auf den Ebenen (ISO/OSI-Schichten) der Programmmodule über die DECT/GAP-Luftschnittstelle ,
FIGUR 4 bis 6 Anreiz-Zustands-Diagramme des Sonderprotokolls (Common Access Profile) als Zusatzprotokoll zum DECT-Standardprotokoll und GAP-Standardprotokoll nach FIGUR 3.

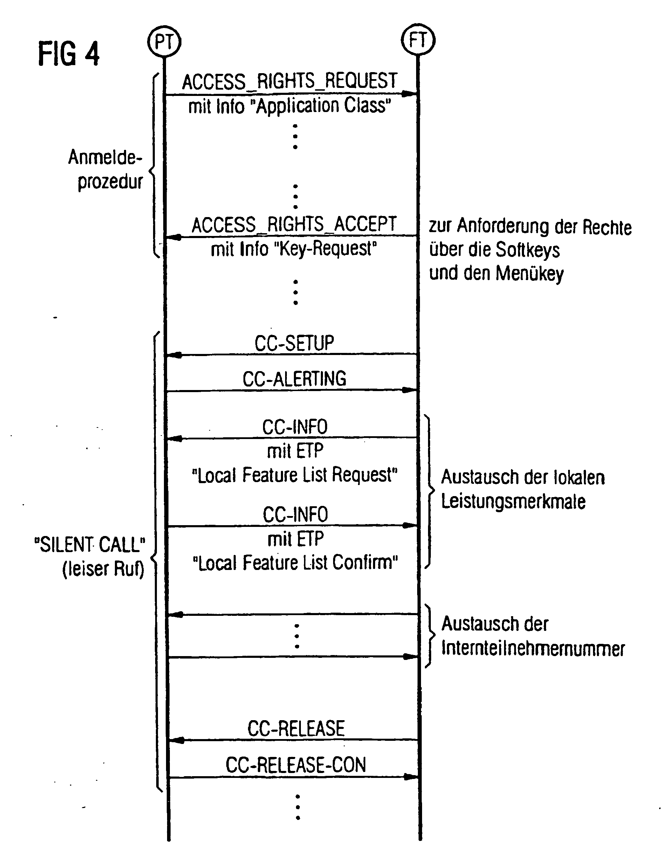

FIGUR 3 zeigt ausgehend von dem bekannten DECT/GAP-System nach FIGUR 2 den Datenaustausch auf den Ebenen (ISO/OSI-Schichten) der Programmmodule PGM der Basisstation BS und dem Mobilteil MT über die DECT/GAP-Luftschnittstelle. Zur Unterscheidung der programmmodule PGM wird das Programmmodul PGM der Basisstation BS als basisstationsspezifisches Programmmodul BS-PGM bezeichnet und das Programmmodul PGM des Mobilteils MT als mobilteilspezifisches Programmmodul MT-PGM bezeichnet. In der Nomenklatur des DECT/GAP-Standards mit den über die DECT/GAP-Luftschnittstelle abzuwickelnden DECT/GAP-Standardprotokollen wird die Basisstation BS als Fixed Termination FT und das Mobilteil MT als Portable Termination PT bezeichnet.

FIGUR 3 zeigt in einer Prinzipdarstellung die auf den ersten drei Schichten, der als Bitübertragungsschicht bezeichneten Schicht-1, der als Sicherungsschicht bezeichneten Schicht-2 und der als Vermittlungsschicht bezeichneten Schicht-3, aufgrund des DECT-Standardprotokolls, des GAP-Standardprotokolls und eines als Ergänzung (Bindeglied) zu diesen Protokollen dienenden Sonderprotokolls über die DECT/GAP-Luftschnittstelle stattfindenden "PT ↔ FT"-Datenübertragung. Das Sonderprotokoll ist Bestandteil eines proprietären (siemensspezifischen) Protokollprofils, dem Common Access Profile CAP. Der wesentliche Inhalt des "Common Access Profile" ist der Austausch von im DECT-Standard definierten "ESCAPE TO PROPRIETARY"-Informationselementen (ETP-Informationselementen) mittels DECT/GAP-Meldungen. Außerdem werden durch das "Common Access Profile" optionale im GAP-Standard als Option vorgesehene GAP-Elemente als CAP-Elemente übernommen und im GAP-Standard nicht abschließend geregelte Punkte und Prozeduren festgelegt.

FIGUR 4 zeigt in Form eines Anreiz-Zustands-Diagrammes einen ersten Meldungsfluß, bei dem ETP-Informationselemente zwischen der als Fixed Termination FT ausgebildeten Basisstation BS und dem als Portable Termination PT ausgebildeten Mobilteil MT ausgetauscht werden. Dargestellt sind insbesondere eine Anmeldeprozedur und eine "Leiser Ruf-Prozedur ("Silent Call"-Prozedur).

Die Anmeldeprozedur beginnt damit, daß das Mobilteil MT, PT eine "ACCESS-RIGHTS-REQUEST"-Meldung mit einem INFO-Informationselement "Application Class" an die Basisstation BS, FT überträgt. Mit dem INFO-Informationselement "Application Class" teilt das Mobilteil MT, PT der Basisstation BS, FT seine Applikationsklasse (application class) mit.

Danach wird die Anmeldeprozedur in bekannter Weise fortgesetzt. Zum Abschluß der Anmeldeprozedur wird von der Basisstation BS, FT eine "ACCESS-RIGHTS-ACCEPT"-Meldung mit einem INFO-Informationselement "KEY-REQUEST" an das Mobilteil MT, PT übertragen. Mit dem INFO-Informationselement "KEY-REQUEST" fordert die Basisstation BS, FT die Rechte (z.B. Benutzungs- und Zugriffsrechte) über mit Software belegten Tasten, die sogenannten Softkeys, und Menü-Tasten (Menükeys) des Mobilteils MT, PT an, sofern es sich bei dem Mobilteil um ein Mobilteil mit Menü- und Softkeys handelt.

Die "Silent Call"-Prozedur beginnt damit, daß die Basisstation BS, FT eine "CC-SETUP"-Meldung zur Initiierung eines Call-Aufbaus an das Mobilteil MT, PT überträgt. Im Unterschied zur Initiierung eines im DECT-Standard vorgesehenen Call-Aufbaus, bei dem die "CC-SETUP"-Meldung immer ein SIGNAL-Informationselement enthält, ist dieses Informationselement bei der "Silent Call"-Prozedur nicht vorhanden. Dadurch wird dem Mobilteil MT, PT ein leiser Call-Aufbau signalisiert, worauf das Mobilteil MT, FT akustisch nicht wahrnehmbar ist. Nichtsdestotrotz sendet das Mobilteil MT, PT, wie beim DECT-spezifischen Call-Aufbau üblich und sozusagen als Bestätigung der empfangenen "CC-SETUP"-Meldung eine "CC-ALERTING"-Meldung.

Danach wird im Rahmen der "Silent Call"-Prozedur von der Basisstation BS, FT eine "CC-INFO"-Meldung mit einem ETP-Informationselement "LOCAL FEATURE LIST REQUEST" an das Mobilteil MT, PT übertragen. Mit dieser Meldung wird das Mobilteil MT, PT aufgefordert, seine lokalen Leistungsmerkmale der Basisstation BS, FT mitzuteilen. Außerdem teilt die Basisstation BS dem Mobilteil MT ihre lokalen Leistungsmerkmale mit.

Als Antwort auf diese Meldung wird von dem Mobilteil MT, PT die "CC-INFO"-Meldung mit einem ETP-Informationselement "LOCAL FEATURE LIST CONFIRM" an die Basisstation BS, FT übertragen. Mit diesem ETP-Informationselement "LOCAL FEATURE LIST CONFIRM" teilt das Mobilteil MT, PT der Basisstation BS, FT seine lokalen Leistungsmerkmale mit, so dass damit ein Austausch der Leistungsmerkmale erfolgt ist.

Anschließend werden im Rahmen der "Silent Call"-Prozedur durch einen Meldungsfluß zwischen der Basisstation BS, FT und dem Mobilteil MT, PT Internteilnehmernummern ausgetauscht, bevor als Abschluß der "Silent Call"-Prozedur von der Basisstation BS, FT eine "CC-RELEASE"-Meldung an das Mobilteil MT, PT und als Antwort auf diese Meldung von dem Mobilteil MT, PT eine "CC-RELEASE-CON"-Meldung an die Basisstation BS, FT übertragen werden.

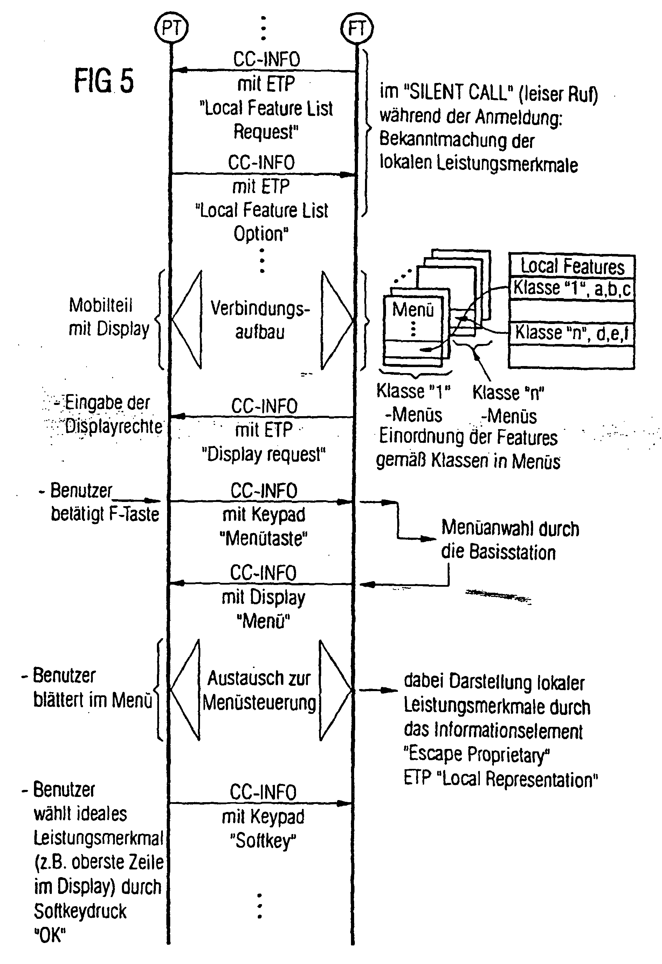

FIGUR 5 zeigt in Form eines Anreiz-Zustands-Diagrammes einen zweiten Meldungsfluß, bei dem wieder ETP-Informationselemente zwischen der als Fixed Termination FT ausgebildeten Basisstation BS und dem als Portable Termination PT ausgebildeten Mobilteil MT ausgetauscht werden.

Der Meldungsfluß beginnt damit, daß im Rahmen der "Silent Call"-Prozedur, wie in FIGUR 4 beschrieben, vorzugsweise lokale Leistungsmerkmale bekanntgemacht werden, indem die Basisstation BS, FT die "CC-INFO"-Meldung mit dem ETP-Informationselement "LOCAL FEATURE LIST REQUEST" an das Mobilteil MT, PT überträgt und das Mobilteil MT, PT mit dieser Meldung auffordert, seine lokalen Leistungsmerkmale der Basisstation BS, FT mitzuteilen.

Als Antwort auf diese Meldung wird von dem Mobilteil MT, PT die "CC-INFO"-Meldung mit dem ETP-Informationselement "LOCAL FEATURE LIST OPTION" an die Basisstation BS, FT übertragen. Mit dem ETP-Informationselement "LOCAL FEATURE LIST OPTION" teilt das Mobilteil MT, PT der Basisstation BS, FT seine lokalen Leistungsmerkmale in Form von lokalen Leistungsmerkmalsklassen mit.

Danach kommt es zu einem Verbindungsaufbau zwischen der Basisstation BS, FT und dem Mobilteil MT, PT.

In dem Meldungsflußdiagramm der FIGUR 5 ist das Mobilteil MT, PT ein Mobilteil mit Display und Menüsteuerung. In diesem Fall überträgt die Basisstation BS, FT die "CC-INFO"-Meldung mit einem ETP-Informationselement "DISPLAY REQUEST" an das Mobilteil MT, PT und fordert mit dieser Meldung die Displayrechte von dem Mobilteil MT, PT an. In dem Mobilteil MT, PT werden daraufhin die Displayrechte abgegeben.

Wird im Anschluß daran an dem Mobilteil MT, PT von dem Benutzer eine F-Taste betätigt, so überträgt dieses die "CC-INFO"-Meldung mit einem KEYPAD-Informationselement "MENÜTASTE" an die Basisstation BS, FT.

Die Basisstation BS, FT führt daraufhin orientiert an lokale Leistungsmerkmalsklassen eine Menüanwahl durch und überträgt das ausgewählte Menü an das Mobilteil MT, PT, indem es die "CC-INFO"-Meldung mit einem DISPLAY-Informationselement "MENÜ" an das Mobilteil MT, PT überträgt.

Der Benutzer des Mobilteils MT, PT kann nun in dem eingespielten Menü blättern. Dabei kommt zu einem Austausch zur Menüsteuerung zwischen dem Mobilteil MT, PT und der Basisstation BS, FT, bei der lokale Leistungsmerkmale durch ein ETP-Informationselement "LOCAL REPRESENTATION" dargestellt werden.

Wird von dem Benutzer des Mobilteils MT, PT daraufhin ein ideales Leistungsmerkmal (z.B. oberste Zeile im Display) durch Drücken der Softkey-Taste "OK" ausgewählt, so überträgt das Mobilteil MT, PT diese Information an die Basisstation BS, FT, indem es die "CC-INFO"-Meldung mit dem KEYPAD-Informationselement "SOFTKEY" an die Basisstation BS, FT überträgt.

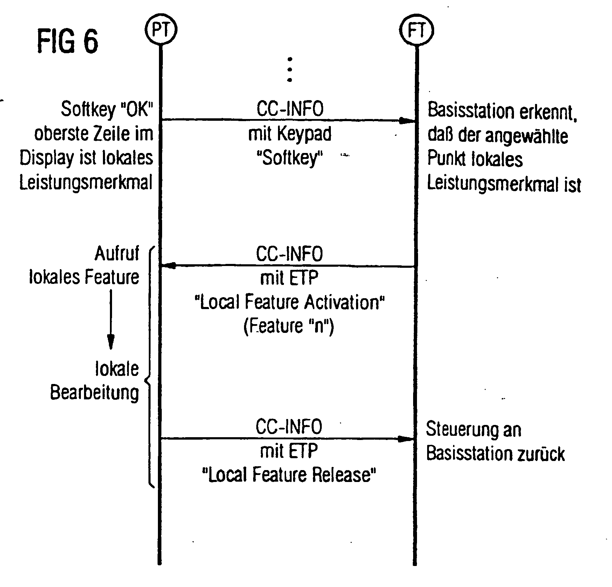

FIGUR 6 zeigt in Form eines Anreiz-Zustands-Diagrammes einen dritten Meldungsfluß, bei dem wiederum ETP-Informationselemente zwischen der als Fixed Termination FT ausgebildeten Basisstation BS und dem als Portable Termination PT ausgebildeten Mobilteil MT ausgetauscht werden.

Der Meldungsfluß beginnt damit, daß das Mobilteil MT, PT - wie in FIGUR 5 beschrieben - die "CC-INFO"-Meldung mit dem KEYPAD-Informationselement "SOFTKEY" an die Basisstation BS, FT überträgt. Die Basisstation BS, FT erkennt das der angewählte Punkt auf dem Display (oberste Zeile) ein lokales Leistungsmerkmal ist und überträgt die "CC-INFO"-Meldung mit einem ETP-Informationselement "LOCAL FEATURE ACTIVATION" an das Mobilteil MT, PT. Mit dem ETP-Informationselement "LOCAL FEATURE ACTIVATION" wird dem Mobilteil MT, PT ein lokales Leistungsmerkmal (z.B. das feature "n") mitgeteilt. In dem Mobilteil MT, PT wird daraufhin das lokale Leistungsmerkmal aufgerufen und lokal bearbeitet, bevor das Mobilteil MT, PT mit dem Übertragen der "CC-INFO"-Meldung mit einem ETP-Informationselement "LOCAL FEATURE RELEASE" an die Basisstation BS, FT die Steuerung an die Basisstation BS, FT zurückgibt.

## Patentansprüche

1. Verfahren zum Abwickeln von Protokollen zwischen Telekommunikationsgeräten drahtloser Telekommunikationssysteme, bei dem in dem drahtlosen Telekommunikationssystems mit mindestens einem ersten Telekommunikationsgerät (BS, MT) und mindestens einem zweiten Telekommunikationsgerät (MT, BS) zwischen dem/den ersten Telekommunikationsgerät/en (BS, MT) und dem/den zweiten Telekommunikationsgerät/en (MT, BS) über eine standardisierte Luftschnittstelle
a) zur Abwicklung eines Standardprotokolls (DECT, GAP) standardprotokollspezifische Meldungen übertragen werden,
b) Informationselemente der standardprotokollspezifische Meldungen übertragen werden,
c) mit den Informationselementen ein Sonderprotokoll (CAP) abgewickelt wird,
**dadurch gekennzeichnet, daß**
mit dem Sonderprotokoll (CAP) unter der Abwicklungs- und Steuerungshoheit des ersten Telekommunikationsgerätes (BS, MT) zusätzliche Informationen zwischen dem ersten Telekommunikationsgerät (BS, MT) und dem zweiten Telekommunikationsgerät (MT, BS) des Telekommunikationssystems ausgetauscht werden.

2. Verfahren nach Anspruch 1, **gekennzeichnet durch** Sonderprozeduren,
a) die im Rahmen des Sonderprotokolls (CAP) durchgeführt werden,
b) mit denen eine Vielzahl von Sondermeldungen übertragen werden und
c) mit denen das zweite Telekommunikationsgerät (MT, BS) an das erste Telekommunikationsgerät (BS, MT) adaptiert wird.

3. Verfahren nach Anspruch 2, **gekennzeichnet durch** eine erste Sonderprozedur, mit der Informationen zwischen dem ersten Telekommunikationsgerät (BS, MT) und dem zweiten Telekommunikationsgerät (MT, BS) nach dem Prinzip "Leiser Ruf" derart ausgetauscht werden, daß dieser Informationsaustausch akustisch nicht wahrnehmbar ist.

4. Verfahren nach Anspruch 3, **dadurch gekennzeichnet, daß** mit der ersten Sonderprozedur Sonderinformationen zum Bekanntmachen des Leistungsmerkmales "Direktruf" von dem ersten Telekommunikationsgerät (BS, MT) zum zweiten Telekommunikationsgerät (MT, BS) übertragen werden.

5. Verfahren nach Anspruch 3 oder 4, **dadurch gekennzeichnet, daß** die erste Sonderprozedur in der Anfangsphase der Abwicklung des Standardprotokolls (DECT, GAP) durchgeführt wird.

6. Verfahren nach einem der Ansprüche 1 bis 5, **dadurch gekennzeichnet, daß** das erste Telekommunikationsgerät (BS, MT) eine Schnurlos-Basisstation und das zweite Telekommunikationsgerät (MT, BS) ein Schnurlos-Mobilteil ist.

7. Verfahren nach einem der Ansprüche 1 bis 5, **dadurch gekennzeichnet, daß** das erste Telekommunikationsgerät (BS, MT) ein Schnurlos-Mobilteil und das zweite Telekommunikationsgerät (MT, BS) eine Schnurlos-Basisstation ist.

8. Verfahren nach Anspruch 6 oder 7, **dadurch gekennzeichnet, daß** das Schnurlos-Mobilteil ein DECTspezifisches Schnurlos-Mobilteil und die Schnurlos-Basisstation eine DECT-spezifische Schnurlos-Basisstation ist.

9. Verfahren nach Anspruch 6 oder 7, **dadurch gekennzeichnet, daß** das Schnurlos-Mobilteil ein GAP-spezifisches Schnurlos-Mobilteil und die Schnurlos-Basisstation eine GAP-spezifische Schnurlos-Basisstation ist.

10. Verfahren nach einem der Ansprüche 1 bis 5, **dadurch gekennzeichnet, daß** das erste Telekommunikationsgerät (BS, MT) eine Mobilfunk-Basisstation/Mobilfunk-Vermittlungsanlage und das zweite Telekommunikationsgerät (MT, BS) ein Mobilfunk-Mobilteil ist.

11. Verfahren nach einem der Ansprüche 1 bis 5, **dadurch gekennzeichnet, daß** das erste Telekommunikationsgerät (BS, MT) ein Mobilfunk-Mobilteil und das zweite Telekommunikationsgerät (MT, BS) eine Mobilfunk-Basisstation/Mobilfunk-Vermittlungsanlage ist.

12. Drahtloses Telekommunikationsgerät, das als erstes Telekommunikationsgerät (BS, MT) zum Abwickeln von Protokollen zwischen einem drahtlosen zweiten Telekommunikationsgerät (MT, BS) in einem drahtlosen Telekommunikationssystem über eine standardisierte Luftschnittstelle
a) zur Abwicklung eines Standardprotokolls (DECT, GAP, GSM) standardprotokollspezifische Meldungen überträgt,
b) Informationselemente der standardprotokollspezifische Meldungen überträgt,
c) mit den Informationselementen ein Sonderprotokoll (CAP) abwickelt,
**dadurch gekennzeichnet, daß**
Nachrichtenübertragungsmittel (BS-PGM, MT-PGM) vorgesehen sind, die in Verbindung mit dem zweiten Telekommunikationsgerät (MT, BS) und zum Austausch zusätzlicher Informationen zwischen dem ersten Telekommunikationsgerät (BS, MT) und dem zweiten Telekommunikationsgerät (MT, BS) des Telekommunikationssystems das Sonderprotokoll (CAP) abwickeln und dazu die Abwicklungs- und Steuerungshoheit besitzen.

13. Drahtloses Telekommunikationsgerät nach Anspruch 12, **dadurch gekennzeichnet, daß** die Nachrichtenübertragungsmittel (BS-PGM, MT-PGM) mit dem zweiten Telekommunikationsgerät (MT, BS) im Rahmen des Sonderprotokollsaustausch (CAP) Sonderprozeduren durchführen,
a) mit denen eine Vielzahl von Sondermeldungen übertragen werden und
b) mit denen das zweite Telekommunikationsgerät (MT, BS) an das erste Telekommunikationsgerät (BS, MT) adaptiert wird.

14. Verwendung des drahtlosen (ersten) Telekommunikationsgerätes nach Anspruch 12 oder 13 als Schnurlos-Basisstation, wobei das zweite Telekommunikationsgerät (MT, BS) als Schnurlos-Mobilteil ausgebildet ist.

15. Verwendung des drahtlosen (ersten) Telekommunikationsgerätes nach Anspruch 12 oder 13 als Schnurlos-Mobilteil, wobei das zweite Telekommunikationsgerät (MT, BS) als Schnurlos-Basisstation ausgebildet ist.

16. Verwendung des drahtlosen (ersten) Telekommunikationsgerätes nach Anspruch 12 oder 13 als Mobilfunk-Basisstation, wobei das zweite Telekommunikationsgerät (MT, BS) als Mobilfunk-Mobilteil ausgebildet ist.

17. Verwendung des drahtlosen (ersten) Telekommunikationsgerätes nach Anspruch 12 oder 13 als Mobilfunk-Mobilteil, wobei das zweite Telekommunikationsgerät (MT, BS) als Mobilfunk-Basisstation ausgebildet ist.

## Claims

1. Method for executing protocols between telecommunication devices of wireless telecommunication systems, wherein in the respective wireless telecommunication system having at least one first telecommunication device (BS, MT) and at least one second telecommunication device (MT, BS) the following steps are performed between said first telecommunication device(s) (BS, MT) and said second telecommunication device(s) (MT, BS), via a standardised air interface:
a) standard-protocol-specific messages are transmitted for the purpose of executing a standard protocol (DECT, GAP),
b) information elements of the standard-protocol-specific messages are transmitted,
c) a special protocol (CAP) is executed by means of the information elements,
**characterised in that**
additional information is exchanged between the first telecommunication device (BS, MT) and the second telecommunication device (MT, BS) of the telecommunication system by means of said special protocol (CAP) under the execution and control jurisdiction of the first telecommunication device (BS, MT).

2. Method according to claim 1, **characterised by** special procedures
a) which are executed as part of the special protocol (CAP),
b) by means of which a plurality of special messages are transmitted and
c) by means of which the second telecommunication device (MT, BS) is adapted to the first telecommunication device (BS, MT).

3. Method according to claim 2, **characterised by** a first special procedure by means of which information is exchanged between the first telecommunication device (BS, MT) and the second telecommunication device (MT, BS) according to the "silent call" principle in such a way that said exchange of information is not acoustically perceptible.

4. Method according to claim 3, **characterised in that by** means of the first special procedure special information for making known the service feature "direct call" is transmitted from the first telecommunication device (BS, MT) to the second telecommunication device (MT, BS).

5. Method according to claim 3 or 4, **characterised in that** the first special procedure is executed in the initial phase of the execution of the standard protocol (DECT, GAP).

6. Method according to one of claims 1 to 5, **characterised in that** the first telecommunication device (BS, MT) is a cordless base station and the second telecommunication device (MT, BS) is a cordless mobile part.

7. Method according to one of claims 1 to 5, **characterised in that** the first telecommunication device (BS, MT) is a cordless mobile part and the second telecommunication device (MT, BS) is a cordless base station.

8. Method according to claim 6 or 7, **characterised in that** the cordless mobile part is a DECT-specific cordless mobile part and the cordless base station is a DECT-specific cordless base station.

9. Method according to claim 6 or 7, **characterised in that** the cordless mobile part is a GAP-specific cordless mobile part and the cordless base station is a GAP-specific cordless base station.

10. Method according to one of claims 1 to 5, **characterised in that** the first telecommunication device (BS, MT) is a mobile radio base station/mobile radio switching centre and the second telecommunication device (MT, BS) is a mobile radio mobile part.

11. Method according to one of claims 1 to 5 or, **characterised in that** the first telecommunication device (BS, MT) is a mobile radio mobile part and the second telecommunication device (MT, BS) is a mobile radio base station/mobile radio switching centre.

12. Wireless telecommunication device which, as the first telecommunication device (BS, MT), performs the following steps for the purpose of executing protocols between a wireless second telecommunication device (MT, BS) in a wireless telecommunication system via a standardised air interface:
a) transmits standard-protocol-specific messages for executing a standard protocol (DECT, GAP, GSM),
b) transmits information elements of the standard-protocol-specific messages
c) executes a special protocol by means of the information elements,
**characterised in that**
message transmission means (BS-PGM, MT-PGM) are provided which execute the special protocol (CAP) in conjunction with the second telecommunication device (MT, BS) and for the purpose of exchanging additional information between the first telecommunication device (BS, MT) and the second telecommunication device (MT, BS) and towards that end possess execution and control jurisdiction.

13. Wireless telecommunication device according to claim 12, **characterised in that** the message transmission means (BS-PGM, MT-PGM) perform special procedures with the second telecommunication device (MT, BS) as part of the special protocol exchange (CAP),
a) by means of which a plurality of special messages are transmitted and
b) by means of which the second telecommunication device (MT, BS) is adapted to the first telecommunication device (BS, MT).

14. Use of the wireless (first) telecommunication device according to claim 12 or 13 as a cordless base station, the second telecommunication device (MT, BS) being embodied as a cordless mobile part.

15. Use of the wireless (first) telecommunication device according to claim 12 or 13 as a cordless mobile part, the second telecommunication device (MT, BS) being embodied as a cordless base station.

16. Use of the wireless (first) telecommunication device according to claim 12 or 13 as a mobile radio base station, the second telecommunication device (MT, BS) being embodied as a mobile radio mobile part.

17. Use of the wireless (first) telecommunication device according to claim 12 or 13 as a mobile radio mobile part, the second telecommunication device (MT, BS) being embodied as a mobile radio base station.

## Revendications

1. Procédé permettant le déroulement de protocoles entre des appareils de télécommunication de systèmes de télécommunication sans fil, dans lequel, dans le système de télécommunication sans fil comprenant au moins un premier appareil de télécommunication (BS, MT) et au moins un deuxième appareil de télécommunication (MT, BS)
a) des messages spécifiques aux normes sont transmis pour le déroulement d'un protocole standard (DECT, GAP),
b) des éléments d'information des messages spécifiques aux normes sont transmis,
c) un protocole spécial (CAP) se déroule au moyen des éléments d'information
entre le/les premier(s) appareil(s) de télécommunication (BS, MT) et le/les deuxième(s) appareil(s) de télécommunication (MT, BS) par l'intermédiaire d'une interface à air standardisée,
**caractérisé en ce que**
des informations supplémentaires sont échangées entre le premier appareil de télécommunication (BS, MT) et le deuxième appareil de télécommunication (MT, BS) du système de télécommunication au moyen du protocole spécial (CAP) sous la souveraineté de déroulement et de commande du premier appareil de télécommunication (BS, MT).

2. Procédé selon la revendication 1, **caractérisé par** des procédures spéciales
a) qui sont exécutées dans le cadre du protocole spécial (CAP),
b) au moyen desquelles une pluralité de messages spéciaux sont transmis et
c) au moyen desquelles le deuxième appareil de télécommunication (MT, BS) est adapté au premier appareil de télécommunication (BS, MT).

3. Procédé selon la revendication 2, **caractérisé par** une première procédure spéciale, au moyen de laquelle des informations sont échangées entre le premier appareil de télécommunication (BS, MT) et le deuxième appareil de télécommunication (MT, BS) selon le principe « appel en sourdine », de telle manière que cet échange d'informations n'est pas perceptible acoustiquement.

4. Procédé selon la revendication 3, **caractérisé en ce qu'**avec la première procédure spéciale, des informations spéciales sont transmises par le premier appareil de télécommunication (BS, MT) au deuxième appareil de télécommunication (MT, BS) pour faire connaître le service « appel direct ».

5. Procédé selon la revendication 3 ou 4, **caractérisé en ce que** la première procédure spéciale est exécutée dans la phase initiale du déroulement du protocole standard (DECT, GAP).

6. Procédé selon l'une quelconque des revendications 1 à 5, **caractérisé en ce que** le premier appareil de télécommunication (BS, MT) est une station de base sans fil et **en ce que** le deuxième appareil de télécommunication (MT, BS) est une unité mobile sans fil.

7. Procédé selon l'une quelconque des revendications 1 à 5, **caractérisé en ce que** le premier appareil de télécommunication (BS, MT) est une unité mobile sans fil et **en ce que** le deuxième appareil de télécommunication (MT, BS) est une station de base sans fil.

8. Procédé selon la revendication 6 ou 7, **caractérisé en ce que** l'unité mobile sans fil est une unité sans fil spécifique à DECT et **en ce que** la station de base sans fil est une station de base sans fil spécifique à DECT.

9. Procédé selon la revendication 6 ou 7, **caractérisé en ce que** l'unité mobile sans fil est une unité sans fil spécifique à GAP et **en ce que** la station de base sans fil est une station de base sans fil spécifique à GAP.

10. Procédé selon l'une quelconque des revendications 1 à 5, **caractérisé en ce que** le premier appareil de télécommunication (BS, MT) est une station de base de radiocommunication mobile/une installation de commutation de radiocommunication mobile et **en ce que** le deuxième appareil de télécommunication (MT, BS) est une unité mobile de radiocommunication mobile.

11. Procédé selon l'une quelconque des revendications 1 à 5, **caractérisé en ce que** le premier appareil de télécommunication (BS, MT) est une unité mobile de radiocommunication mobile et **en ce que** le deuxième appareil de télécommunication (MT, BS) est une station de base de radiocommunication mobile/une installation de commutation de radiocommunication mobile.

12. Appareil de télécommunication sans fil, qui, en tant que premier appareil de télécommunication (BS, MT) destiné au déroulement de protocoles entre un deuxième appareil de télécommunication (MT, BS) sans fil dans un système de télécommunication sans fil,
a) transmet des messages spécifiques au protocole standard pour le déroulement d'un protocole standard (DECT, GAP, GSM),
b) transmet des éléments d'information des messages spécifiques au protocole standard,
c) déroule un protocole spécial (CAP) au moyen des éléments d'information,
par l'intermédiaire d'une interface à air standardisée,
**caractérisé en ce que**
des moyens de transmission de messages (BS-PGM, MT-PGM) sont prévus, qui, en liaison avec le deuxième appareil de télécommunication (MT, BS) et pour l'échange d'informations supplémentaires entre le premier appareil de télécommunication (BS, MT) et le deuxième appareil de télécommunication (MT, BS) du système de télécommunication, font dérouler le protocole spécial (CAP) et possèdent à cet effet la souveraineté de déroulement et de commande.

13. Appareil de télécommunication sans fil selon la revendication 12, **caractérisé en ce que** les moyens de transmission de messages (BS-PGM, MT-PGM) exécutent des procédures spéciales à l'aide du deuxième appareil de télécommunication (MT, BS) dans le cadre de l'échange de protocoles spéciaux (CAP),
a) à l'aide desquelles une pluralité de messages spéciaux sont transmis et
b) à l'aide desquelles le deuxième appareil de télécommunication (MT, BS) est adapté au premier appareil de télécommunication (BS, MT).

14. Utilisation du (premier) appareil de télécommunication sans fil selon la revendication 12 ou 13 en tant que station de base sans fil, le deuxième appareil de télécommunication (MT, BS) étant exécuté comme unité mobile sans fil.

15. Utilisation du (premier) appareil de télécommunication sans fil selon la revendication 12 ou 13 en tant qu'unité mobile sans fil, le deuxième appareil de télécommunication (MT, BS) étant exécuté comme station de base sans fil.

16. Utilisation du (premier) appareil de télécommunication sans fil selon la revendication 12 ou 13 en tant que station de base de radiocommunication mobile, le deuxième appareil de télécommunication (MT, BS) étant exécuté comme unité mobile de radiocommunication mobile.

17. Utilisation du (premier) appareil de télécommunication sans fil selon la revendication 12 ou 13 en tant qu'unité mobile de radiocommunication, le deuxième appareil de télécommunication (MT, BS) étant exécuté comme station de base de radiocommunication mobile.
